# EUROPÄISCHE PATENTSCHRIFT

(11) **EP 2 304 394 B1**
(45) Veröffentlichungstag und Bekanntmachung des Hinweises auf die Patenterteilung: **03.01.2018**
(21) Anmeldenummer: 09775533.4
(22) Anmeldetag: 17.03.2009
(51) Int. Cl.: G01F 13/00, G01F 23/20, A61C 13/12, B65D 83/06

(54) **DOSIERVORRICHTUNG FÜR PULVERFÖRMIGE SUBSTANZEN**
DOSING DEVICE FOR POWDERY SUBSTANCES
DISPOSITIF DE DOSAGE POUR DES SUBSTANCES PULVÉRULENTES

(30) Priorität: 22.07.2008 DE 102008034130
(43) Veröffentlichungstag der Anmeldung: 06.04.2011
(73) Patentinhaber: Amann Girrbach AG, 6842 Koblach (AT)
(72) Erfinder: KOCH, Timo, A-6974 Gaissau (AT)
(74) Vertreter: Fechner, Thomas
(86) Internationale Anmeldenummer: PCT/AT2009/000113
(87) Internationale Veröffentlichungsnummer: WO 2010/009483

(56) Entgegenhaltungen:
- EP-A1- 0 406 164
- WO-A1-2008/031232
- AT-B- 281 685
- DE-A1- 1 556 175
- US-A- 1 779 850
- US-A- 6 116 471

## Beschreibung

Die Erfindung betrifft eine Dosiervorrichtung gemäß des Oberbegriffs des Patentanspruchs 1. Ferner betrifft die Erfindung Verfahren zum Betrieb einer Dosiervorrichtung.

Bei einer bekannten Dosiervorrichtung zum Mischen einer oder mehrer pulverförmiger und/oder flüssiger Substanzen für dentaltechnische Anwendungen sind die pulverförmigen und auch die flüssigen Substanzen in behälterartigen Anordnungen vorgesehen, wobei für jede pulverförmige Substanz getrennte Dosiervorrichtungen vorhanden sind. Zur Förderung und Dosierung der pulverförmigen Substanzen sind dabei Förderschnecken angeordnet. Damit die pulverförmigen Substanzen immer ordnungsgemäß den Förderschnecken zugeführt werden, sind im Vorratsbehälter steile Neigungswinkel erforderlich und es ist auch eine spezielle Gleitbeschichtung vorgesehen.

Es sind auch schon Vorrichtungen zum dosierten Austragen von Schüttgut aus einem Behälter bekannt geworden (z.B. DE 25 048 32A oder EP 0 459 475 B1), bei denen für große Austragsmengen und entsprechend große Vorratsbehälter an der Unterseite eines Vorratsbehälters höhenverstellbare oder den Durchflussquerschnitt verändernde Einsätze vorhanden sind, wobei außerdem noch Rüttler eingesetzt werden. Solche Großanlagen sind mechanisch aufwendig und daher für kleine Dosiervorrichtungen, wie dies bei der Dosierung von zahnmedizinischen Pulvermassen der Fall ist, nicht geeignet.

Die WO 2008/031232 A1 offenbart eine gattungsgemäße Dosiervorrichtung, bei der dem Vorratsbehälter eine Vibrationseinrichtung zugeordnet ist.

Die vorliegende Erfindung hat sich daher zur Aufgabe gestellt, eine Dosiervorrichtung der eingangs genannten Art zu schaffen, die eine Dosierung von pulverförmigen Substanzen auf kleinste Gewichtsmengen zulässt und trotzdem einen konstruktiv einfachen Aufbau haben kann.

Erfindungsgemäß gelingt dies mit einer Dosiervorrichtung gemäß Patentanspruch 1.

Durch diese erfindungsgemäßen Maßnahmen wird eine genaue Dosiermöglichkeit auch unter kleinster Gewichtseinhaltung ermöglicht. Allein durch den konstruktiven Aufbau und die Vibrationseinrichtung wird die exakte Dosierung erreicht, ohne dass mechanisch, elektrisch oder pneumatisch Elemente zum Öffnen oder Schließen einer Ausflussöffnung zu betätigen sind. Es sind daher auch keine eventuell zur Verstopfung neigenden dreh- und verschiebbare Teile erforderlich. In diesem Sinne ist somit günstigerweise vorgesehen, dass der Vorratsbehälter eine permanent geöffnete Auslassöffnung aufweist, durch die pulverförmige Substanz austreten kann. Durch die erfindungsgemäße Ausgestaltung von verjüngt ausgebildetem unteren Bereich und dem Einsatz tritt allerdings nur dann pulverförmige Substanz aus der Auslassöffnung aus, wenn die Vibrationseinrichtung eingeschaltet ist.

Durch die Abfolge aus abwechselnd aufeinander folgenden zurückversetzten Bereichen und vorstehenden Bereichen wird verhindert, dass sich die Pulverteilchen beim Dosieren elektrisch aufladen.

Der Vollständigkeit halber wird darauf hingewiesen, dass sich die Begriffe oben und unten auf die Betriebsstellung der Dosiervorrichtung beziehen. In dieser Betriebsstellung ist die Auslassöffnung des Vorratsbehälters üblicherweise unterhalb, also auf niedrigerem Niveau als der Einsatz und der sich verjüngende untere Bereich des Vorratsbehälters angeordnet. Die Auslassöffnung bildet günstigerweise das untere Ende des Vorratsbehälters. Der untere Bereich des Vorratsbehälters ist günstigerweise nach unten, also insbesondere in Richtung zur Auslassöffnung hin, verjüngt ausgebildet.

Weiter wird bevorzugt vorgeschlagen, dass ein das dosierte Pulver aufnehmendes Gefäß auf einer Wiegeeinrichtung abstellbar ist, wobei die Wiegeeinrichtung und die Vibrationseinrichtung miteinander in Wirkverbindung stehen. Unter der Wirkverbindung ist in diesem Zusammenhang, wie weiter unten noch im Detail erläutert, eine Steuerleitung oder dergleichen zu verstehen, über die die Vibrationseinrichtung von der Wiegeeinrichtung angesteuert werden kann. Um den Wiegevorgang nicht durch das Vibrieren der Vibrationseinrichtung zu stören, sind Wiegeeinrichtung und Vibrationseinrichtung aber günstigerweise voneinander mechanisch entkoppelt bzw. schwingungsentkoppelt. Durch diese Maßnahme ist die Wiegeeinrichtung, die ja dann die Steuerelemente enthält, keiner Vibration ausgesetzt, so dass eine Feinabstimmung der benötigten Pulvermenge möglich ist.

In einer besonderen Konstruktion mit einfacher Herstellmöglichkeit ist vorgesehen, dass der untere Bereich des Vorratsbehälters kegel- oder pyramidenförmig verjüngt ausgebildet ist und vorzugsweise der Einsatz einen nach oben hin sich kegel- oder pyramidenförmig verjüngenden Abschnitt aufweist. Kegel- oder pyramidenförmige oder auch kegelstumpf- oder pyramidenstumpfförmige Abschnitte lassen sich besonders einfach fertigen.

Bei der Ausbildung der Dosiervorrichtung ist es vorteilhaft, wenn die Durchgangsöffnung, vorzugsweise umfangsgeschlossen, ringförmig ausgebildet ist. Es ist daher gar nicht erforderlich, dass sich die einander zugewendeten Abschnitte des sich verjüngenden Bereiches des Vorratsbehälters und des Einsatzes gegenseitig berühren.

Im Rahmen der Erfindung ist es aber auch denkbar, dass als Durchgangsöffnungen mehrere Bohrungen oder Durchbrechungen oder siebartige Abschnitte vorgesehen sind. Je nach Art der zu dosierenden Pulvermasse können daher besondere Maßnahmen gesetzt werden.

Ferner wird vorgeschlagen, dass an der Unterseite des Einsatzes ein Bolzen oder eine Hülse nach unten absteht, der oder die den Durchflussquerschnitt verringert. Es ist damit ein zweiter den Durchfluss des im Vorratsbehälter befindlichen Pulvers einengender Bereich vorhanden, so dass Verschlusselemente an sich nicht erforderlich sind. Falls dennoch gewünscht, können zusätzliche Verschlusselemente vorhanden sein.

Dabei ist es in diesem Zusammenhang von besonderen Vorteil, wenn die zwischen dem verjüngten unteren Bereich des Vorratsbehälters und dem unteren Rand des sich verjüngenden Abschnitts des Einsatzes verbleibende(n) Durchgangsöffnung(en) im Querschnitt größer ist (sind) als die zwischen dem verjüngten unteren Bereich des Vorratsbehälters und dem Bolzen oder der Hülse verbleibende ringförmige Durchgangsöffnung. Es folgt also auf eine im Querschnitt größere Durchgangsöffnung eine im Querschnitt kleinere Durchgangsöffnung, so dass nach dem Abschalten der Vibrationseinrichtung kein Pulver mehr nach unten hin austritt. Die aufeinander abgestimmten Abschnitte des Vorratsbehälters und des Vibrationseinsatzes bilden somit einen ausreichenden Rückhalt gegen unkontrolliert austretendes Pulver.

Gerade zur Voreinstellung für verschiedene Konsistenzen von diversen Pulvermassen ist es vorteilhaft, wenn der Bolzen bzw. die Hülse, der bzw. die von der Unterseite des Einsatzes absteht, auswechselbar gehalten ist. Es kann daher von vorne herein eine Grobeinstellung für diverse Pulvermassen vorgenommen werden.

Da keine Höhenverstellung oder auch Verdrehung von Teilen des Vibrationseinsatzes erforderlich ist, ist es vorteilhaft, wenn der Einsatz gegenüber dem verjüngten unteren Bereich des Vorratsbehälters lagegesichert abgestützt ist. Es ist damit eine sichere Anordnung des Einsatzes trotz der gegebenen ständigen Vibrationen beim Austragen der Pulvermassen gewährleistet.

In diesem Zusammenhang ist es auch möglich, dass der Einsatz fest mit dem Vorratsbehälter verbunden ist und die Vibrationseinrichtung im Einsatz angeordnet ist. Auf diese Weise kann der Vorratsbehälter mit einer Vibrationseinrichtung innerhalb des Einsatzes mitvibrieren.

Im Rahmen der Erfindung ist es denkbar, dass an einem Deckel oder einer Wand des Vorratsbehälters eine optisch und/oder akustisch wahrnehmbare Nachfüllkontrollanordnung angeordnet ist. Dadurch ergibt sich rechtzeitig ein Warnhinweis, dass der Vorratsbehälter nachgefüllt werden soll.

Eine vorteilhafte Ausgestaltung sieht vor, dass der Einsatz einen oberhalb des sich verjüngenden Abschnitts liegenden Kegel- oder Pyramidenabschnitt aufweist, dessen Spitze nach oben weist und dessen unterer Rand einen geringeren Durchmesser als der untere Rand des sich verjüngenden Abschnitts aufweist und der mit dem sich verjüngenden Abschnitt über einen zylinderförmigen Übergangsabschnitt verbunden ist. Es kann dadurch eine konstruktiv wirkungsvolle Maßnahme geschaffen werden, um die Vibrationseinrichtung unterzubringen und gegebenenfalls auszuwechseln.

Eine handhabungsmäßig gute Anordnung ist dann gegeben, wenn der Vorratsbehälter samt dem Einsatz an einem Grundgestell abnehmbar und verriegelbar gehalten ist. Es kann damit der Vorratsbehälter zum Befüllen oder zum Nachfüllen von dem Grundgestell abgenommen und zum größeren Behälter getragen werden, falls dies notwendig sein sollte.

In diesem Zusammenhang ist vorteilhaft, wenn der Vorratsbehälter mittels eines hakenartigen oberen Abschlusses an einem Tragbolzen am Grundgestell einhängbar und mit am unteren Endbereich angeordneten Verriegelungselementen in der eingehängten Position verriegelbar gehalten ist. Es ist dadurch eine sichere Halterung gegeben und außerdem kann der Vorratsbehälter nicht versehentlich oder bei einem Anstoßen abgehoben werden.

Bei einer solchen konstruktiven Gestaltung können auch gleich noch weitere Maßnahmen geschaffen werden, denn es ergibt sich die Möglichkeit, dass im Bereich der Verriegelungselemente zwischen Vorratsbehälter und Grundgestell Steckvorrichtungen für die elektrische Verbindung für den Betrieb der Vibrationseinrichtung vorgesehen sind. Es werden daher bei einem Wegnehmen des Vorratsbehälters auch gleich die elektrischen Verbindungen getrennt und es wird beim Wiedereinsetzen oder -einhängen die Verbindung wieder hergestellt.

Damit die Übertragung von Vibrationen auf das Grundgestell unterbunden wird, kann vorgesehen sein, dass zwischen Vorratsbehälter und Grundgestell vorzugsweise streifenartige Zwischenlagen aus einem vibrationshemmenden Material angeordnet sind.

Eine besonders einfache Konstruktion und damit auch Montage oder Demontage des Vorratsbehälters ist dann gegeben, wenn der im wesentlichen zylindrische Vorratsbehälter und der verjüngte untere Bereich aus zwei voneinander getrennten Abschnitten gebildet sind, wobei am oberen Umfangsrand des verjüngten Bereiches ein umfangsgeschlossenes Dichtungselement angeordnet ist.

Im Rahmen der Erfindung ist es auch denkbar, dass die Vibrationsfrequenz zur Anpassung an verschiedene Arten von Pulvermassen abgestuft oder stufenlos einstellbar ist oder voreingestellt ist. Es kann damit auch noch diversen Konsistenzen von zu dosierenden Pulvermassen Rechnung getragen werden.

Ein Verfahren zum Betrieb einer Dosiervorrichtung sieht vor, dass die Vibrationseinrichtung am Beginn und am Ende des Dosiervorganges mit einer kleineren Vibrationsfrequenz betrieben wird als in einer dazwischen liegenden Phase des Dosiervorganges. Es wird dadurch erreicht, dass die Pulvermassen vorerst für eine Dosierung vorbereitet werden, also langsam in die Dosierrichtung bewegt werden. Dann folgt die Dosierung der Hauptmenge der Pulvermassen. Am Ende des Dosiervorganges wird dann praktisch der Dosiervorgang wieder reduziert, damit man auf eine exakte, gewünschte Dosiermenge kommt.

In diesem Zusammenhang ist es vorteilhaft, wenn nach einem speziellen Verfahrenschritt die Wiegeeinrichtung die Steuerung der Vibrationsdauer vorgibt. Es ergeben sich dann also abhängig von der benötigten Menge auch die Beginn- und die Endphase der Dosierung.

Eine weitere Möglichkeit des Verfahrens sieht vor, dass die Vibrationseinrichtung voreinstellbar vor Erreichen der gewünschten Fördermenge ganz abgeschaltet wird und dass dann anschließend für die Feindosierung die Vibrationseinrichtung auf einen Maximalwert der Vibrationsfrequenz geschaltet wird und die Vibrationsfrequenz von dieser Einstellung stufenlos oder abgestuft bis auf einen Minimalwert, vorzugsweise Null, verringert wird. Es kann dadurch eine gute Abstimmung auf die exakte Feindosierung am Ende der Dosierung erzielt werden.

Weitere erfindungsgemäße Merkmale und besondere Vorteile werden in der nachstehenden Beschreibung anhand der Zeichnung noch näher erläutert.

Die Fig. 1 zeigt ein erstes Ausführungsbeispiel einer Dosiervorrichtung in ihrer Gesamtheit in einem Vertikalschnitt.
Fig. 2 zeigt in einem Ausschnitt eine zweite erfindungsgemäße Ausführungsform.
Fig. 3 zeigt das Detail A aus Fig. 2 vergrößert.

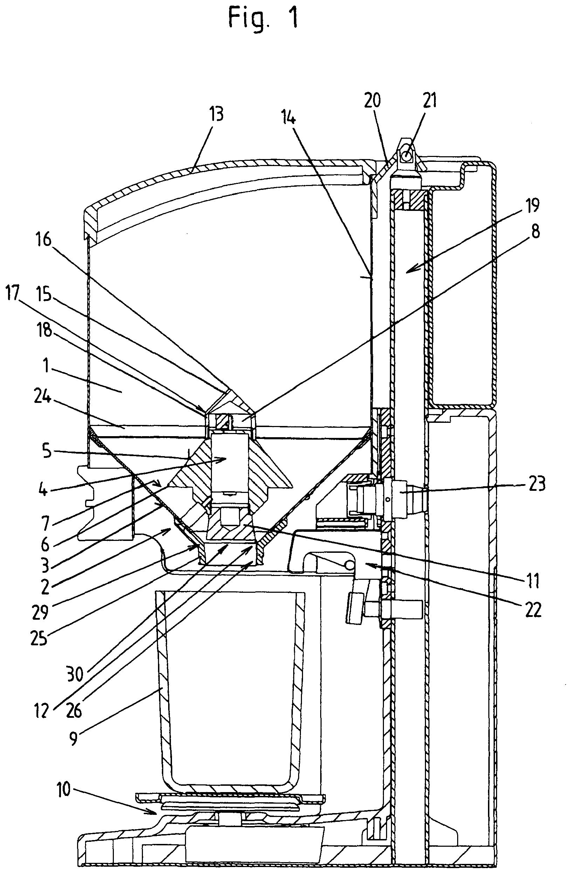

Bei der erfindungsgemäßen Dosiervorrichtung für pulverförmige Substanzen geht es insbesondere um die Vorbereitung von zahnmedizinischen und zahntechnischen Pulvermassen. Solche Pulvermassen werden in dosierter Menge von maximal 2000 Gramm genötigt, wobei die üblicherweise benötigten Mengen bei 50 bis 500 Gramm liegen. Außerdem muss bei zahnmedizinischen und zahntechnischen Pulvermassen eine große Dosiergenauigkeit eingehalten werden können. Es soll also eine Dosiergenauigkeit von ± 0,5 Gramm erreicht werden. Bei der in Fig. 1 dargestellten Dosiervorrichtung sind die Pulvermassen in einen Vorratsbehälter 1 einfüllbar und diesem Vorratsbehälter 1 ist eine Austragvorrichtung 2 zugeordnet. Der untere Bereich 3 des Vorratsbehälters 1 ist kegelförmig oder pyramidenförmig oder auch auf andere Weise, vorzugsweise in Richtung nach unten, verjüngt ausgebildet. Im Vorratsbehälter 1 ist ein Einsatz 4 angeordnet, der mindestens einen sich nach oben, vorzugsweise kegelförmig oder pyramidenförmig oder auf andere Art und Weise sich verjüngenden Abschnitt 5 aufweist, welcher im verjüngten unteren Bereich 3 des Vorratsbehälters 1 angeordnet ist. Zwischen dem unteren Rand 6 des sich verjüngenden Abschnitts 5 des Einsatzes 2 und dem verjüngten unteren Bereich 3 des Vorratsbehälters 1 bleibt bei dieser Dosiervorrichtung eine im Wesentlichen ringförmige Durchgangsöffnung 7 frei. Der Einsatz 2 weist eine Vibrationseinrichtung 8 auf.

Bei der in Fig. 1 dargestellten Dosiervorrichtung ist ein das dosierte Pulver aufnehmendes Gefäß 9 auf einer Wiegeeinrichtung 10 abstellbar. Die Wiegeeinrichtung 10 und die Vibrationseinrichtung 8 stehen miteinander in Wirkverbindung.

Die Dosierung lässt sich bei der Dosiervorrichtung mittels einer entsprechenden Vibrationseinrichtung bewerkstelligen. Diese Vibrationseinrichtung 8 kann in den Einsatz 4 integriert und/oder dem Vorratsbehälter 1 zugeordnet sein. Beim Vorratsbehälter 1 ist eine Anordnung der Vibrationseinrichtung sowohl an der Innen- als auch an der Außenseite denkbar.

Zum Betrieb dieser Dosiervorrichtung wird ein besonderes Verfahren eingesetzt. Die Vibrationseinrichtung 8 wird am Beginn und am Ende des Dosiervorganges mit einer kleineren Vibrationsfrequenz betrieben wird als in einer dazwischen liegenden Phase des Dosiervorganges. Die Wiegeeinrichtung 10 gibt dabei die Steuerung der Vibrationsdauer vor. Es kann also je nach Bedarf eingestellt werden, exakt wie viel Menge der Pulvermasse in vom Vorratsbehälter 1 in das Gefäß 9 eingefüllt werden soll. Dabei ergibt sich noch eine zusätzlich Möglichkeit der Verbesserung der exakten Endförderung, also der abschließenden Feindosierung. Dieser Verfahrensablauf sieht dann vor, dass die Vibrationseinrichtung 8 voreinstellbar vor Erreichen der gewünschten Fördermenge ganz abgeschaltet wird und dass dann anschließend für die Feindosierung die Vibrationseinrichtung 8 auf einen Maximalwert der Vibrationsfrequenz geschaltet wird und die Vibrationsfrequenz von dieser Einstellung stufenlos oder abgestuft bis auf einen Minimalwert, vorzugsweise Null, verringert wird.

Die Vibrationsfrequenz ist zur Anpassung an verschiedene Arten von Pulvermassen abgestuft oder stufenlos einstellbar oder voreinstellbar.

Es ist oben von einer Durchgangsöffnung 7 ausgegangen worden, welche vorzugsweise umfangsgeschlossen ringförmig ausgebildet ist. Es ist jedoch im Rahmen der Erfindung auch möglich, dass als Durchgangsöffnungen mehrere Bohrungen oder Durchbrechungen oder siebartige Abschnitte vorgesehen sind. Je nach Konstruktion und speziellem Einsatz der Dosiervorrichtung kann die optimale Lösung eingesetzt werden.

An der Unterseite des Einsatzes 4 steht ein Bolzen 11 oder eine Hülse nach unten ab, der oder die den Durchflussquerschnitt verringert. Der Bolzen 11 bzw. die Hülse, der bzw. die von der Unterseite des Einsatzes 4 absteht, ist vorteilhaft auswechselbar gehalten.

Die zwischen dem verjüngten unteren Bereich 3 des Vorratsbehälters 1 und dem unteren Rand 6 des sich verjüngenden Abschnitts 5 des Einsatzes 4 verbleibende(n) Durchgangsöffnung(en) 7 sind im Querschnitt größer ist (sind) als die zwischen dem verjüngten unteren Bereich des Vorratsbehälters 1 und dem Bolzen 11 oder der Hülse verbleibende ringförmige Durchgangsöffnung 12.

Der Einsatz 4 ist gegenüber dem verjüngten unteren Bereich 3 des Vorratsbehälters 1 lagegesichert abgestützt ist. Diese Abstützung kann beispielsweise durch einen rohrförmigen Teil erfolgen, über welchen auch die elektrische Leitung zur Vibrationseinrichtung geführt werden kann. Jeweils um 120° versetzt dazu können weiter Abstützung angeordnet sein, beispielsweise auch nur in Form von Gummipuffern.

Es ist aber auch denkbar, den Einsatz 4 fest, also ohne Gummipuffer, mit Vorratsbehälter 1 zu verbinden. Auch dann besteht die Möglichkeit, die Vibrationseinrichtung 8 im Einsatz 4 unterzubringen, wobei dann der Vorratsbehälter 1 wie der Einsatz selbst einer entsprechenden Vibration ausgesetzt wird.

Bei einer besonderen Ausführungsform kann an einem Deckel 13 oder einer Wand 14 des Vorratsbehälters 1 eine optisch und/oder akustisch wahrnehmbare Nachfüllkontrollanordnung angeordnet sein.

Der Einsatz 4 weist einen oberhalb des sich verjüngenden Abschnitts 5 liegenden Kegel oder Pyramidenabschnitt 15 auf, dessen Spitze 16 nach oben weist und dessen unterer Rand 17 einen geringeren Durchmesser als der untere Rand 6 des sich verjüngenden Abschnitts 5 aufweist und der mit dem sich verjüngenden Abschnitt 5 über einen zylinderförmigen Übergangsabschnitt 18 verbunden ist. In diesem Übergangsabschnitt 18 kann die Vibrationseinrichtung 8 untergebracht sein.

Bei einer besonderen, jedoch ebenfalls in Fig. 1 dargestellten Ausführungsvariante ist der Vorratsbehälter 1 samt dem Einsatz 4 an einem Grundgestell 19 abnehmbar und verriegelbar gehalten. Dabei sieht eine Konstruktionsmöglichkeit von, am oberen Ende des Vorratsbehälters 1 einen hakenartigen Abschluss 20 vorzusehen, mittels welchem der Vorratsbehälter 1 an einem Tragbolzen 21 am Grundgestell 19 einhängbar ist. Zweckmäßigerweise wird der Vorratsbehälter 1 mit am unteren Endbereich angeordneten Verriegelungselementen 22 in der eingehängten Position verriegelbar gehalten.

In diesem Zusammenhang ist es vorteilhaft, im Bereich der Verriegelungselemente 22 zwischen Vorratsbehälter 1 und Grundgestell 19 Steckvorrichtungen 23 für die elektrische Verbindung für den Betrieb beispielsweise der Vibrationseinrichtung 8 vorzusehen.

Insbesondere dann, wenn am Vorratsbehälter keine oder nur sehr geringe Vibration verspürt werden soll, sind zwischen dem Vorratsbehälter 1 und dem Grundgestell 19 vorzugsweise streifenartige Zwischenlagen aus einem vibrationshemmenden Material angeordnet.

Im Rahmen der Erfindung ist aber grundsätzlich auch eine Ausführung möglich, bei der der Vorratsbehälter fest mit dem Grundgestell verbunden ist. In den meisten Fällen sind die Pulvermassen schon in Kleinpackungen im Handel, so dass diese an Ort und Stelle in den Grundbehälter entleert werden können, ohne dass allzu viel Staub aufwirbelt.

Aus Fig. 1 ist ferner ersichtlich, dass der im wesentlichen zylindrische Vorratsbehälter 1 und der verjüngte untere Bereich 3 aus zwei voneinander getrennten Abschnitten gebildet sind. Am oberen Umfangsrand des verjüngten Bereiches 3 ist ein umfangsgeschlossenes Dichtungselement 24 angeordnet, so dass dazwischen keine Pulvermassen nach außen dringen können.

Bei der Dosiervorrichtung gem. Fig. 1 ist an der unteren Auslassöffnung 29 des Vorratsbehälters 1 bzw. dessen unteren Bereiches 3 ein Auslasselement 25 angeordnet, durch das hindurch die zu dosierende pulverförmige Substanz aus dem Vorratsbehälter 1 in das Gefäß 9 strömt, wobei ein im Wesentlichen glatter Innenwandabschnitt 26 die Durchströmöffnung 30 des Auslasselementes 25 umfasst. Dies funktioniert unproblematisch, solange keine Substanzen dosiert werden sollen, welche sich beim Durchströmen des Auslasselementes bzw. schon vorher elektrostatisch aufladen. Sollen hingegen Substanzen, wie z. B. Gips, dosiert werden, welche dazu neigen, sich elektrostatisch aufzuladen, so kann dies den Dosierprozess stören, indem die zu dosierenden Partikel dann nicht mehr in einem gleichmäßigen Strahl strömen, sondern aufgrund ihrer elektrostatischen Aufladung unkontrolliert aus dem Auslasselement 25 bzw. dessen Durchströmöffnung 30 herausspritzen. Konventionelle Methoden zur Reduzierung der elektrischen Aufladung der dosierten Pulverteilchen bestehen im Einsatz von metallischen Drähten oder Gittern, an denen sich die geladenen Pulverteilchen beim Dosieren bzw. Fallen entladen sollen. Dies führt aber erfahrungsgemäß nicht in ausreichendem Umfang zum gewünschten Erfolg.

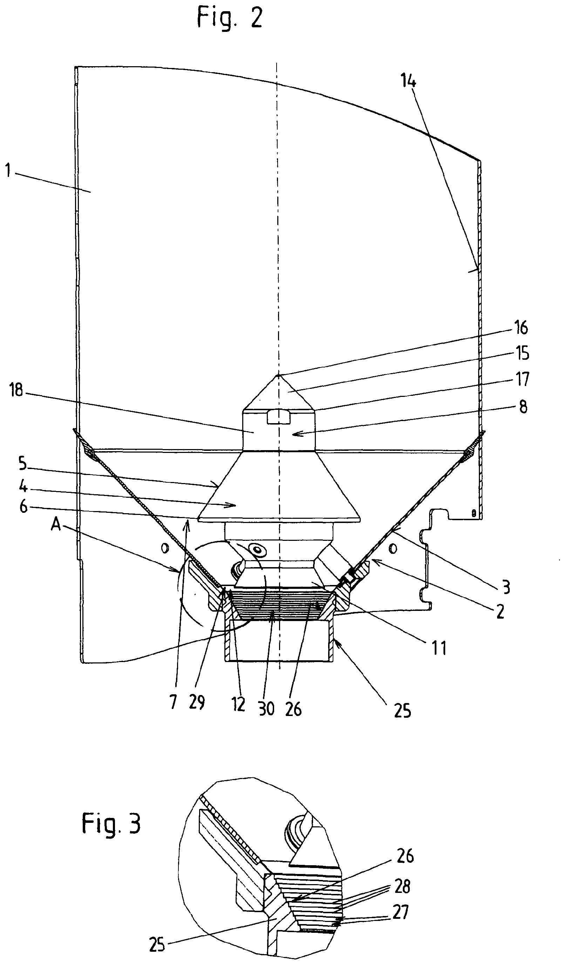

Die Fig. 2 und 3 zeigen nun eine im Bereich des Auslasselementes 25 gemäß der Erfindung abgewandelte Ausführungsvariante , bei der der Vorteil darin besteht, dass sich die Pulverteilchen beim Dosieren erst gar nicht elektrisch aufladen. Fig. 3 zeigt das Detail A aus Fig. 2 vergrößert. Bis auf die nun im Folgenden geschilderten Unterschiede ist das erfindungsgemäße Ausführungsbeispiel gem. Fig. 2 und 3 analog ausgebildet wie die Dosiervorrichtung gem. Fig. 1, so dass diesbezüglich auf die obigen Ausführungen verwiesen werden kann.

Der Unterschied zur Dosiervorrichtung gem. Fig. 1 liegt in der Ausgestaltung des Auslasselementes 25 bzw. insbesondere dessen Innenwandabschnittes 26. Beim erfindungsgemäßen Ausführungsbeispiel gem. Fig. 2 und 3 ist vorgesehen, dass der untere Bereich 3 des Vorratsbehälters 1 die Auslassöffnung 29 für die pulverförmigen Substanzen aufweist, wobei an der Auslassöffnung 29 ein Auslasselement 25 angeordnet ist, welches zumindest einen, eine sich nach unten im Querschnitt verjüngende Durchströmöffnung 30 für die pulverförmigen Substanzen umfassenden, Innenwandabschnitt 29 aufweist, wobei der Innenwandabschnitt 29 von oben nach unten gesehen eine Abfolge aus abwechselnd aufeinander folgenden zurückversetzten Bereichen 27 und vorstehenden Bereichen 28 aufweist. Hierdurch wird eine, insbesondere zur Vertikale schräg verlaufende Form des Innenwandabschnittes 29 realisiert, welche Vertiefungen in Form der zurückversetzten Bereiche 27 aufweist, welche alternierend mit den vorstehenden Bereichen 28 angeordnet sind. In den durch die zurückversetzten Bereiche 27 ausgebildeten Vertiefungen kann sich pulverförmige Substanz ansammeln. Sind die zurückversetzten Bereiche 27 mit Pulver aufgefüllt, so fließt die nachrieselnde pulverförmige Substanz überwiegend über das in den Vertiefungen bzw. zurückversetzten Bereichen 27 angesammelte pulverförmige Material, wodurch eine elektrostatische Aufladung der nachrieselnden pulverförmigen Substanz und damit das oben genannte Problem vermieden ist. Hierdurch wird erreicht, dass das nachrieselnde Material in Form eines gleichmäßigen Strahls dosiert werden kann und keine Störungen durch elektrostatische Aufladung mehr auftreten. Damit die Ansammlung von pulverförmiger Substanz in den zurückversetzten Bereichen 27 möglichst den gesamten Innenwandabschnitt 29 abdeckt, ist günstigerweise vorgesehen, dass die vorstehenden Bereiche 28 scharfkantig ausgebildet sind. Grundsätzlich können die Vertiefungen bzw. zurückversetzten Bereiche und die dazu alternierend angeordneten vorstehenden Bereiche 28 verschiedene wannenförmige Ausgestaltungen oder dergleichen aufweisen bzw. ausbilden. In einem bevorzugten Ausführungsbeispiel ist, wie insbesondere in Fig. 3 zu sehen, der Innenwandabschnitt 29 zur Ausbildung der zurückversetzten Bereiche 27 und der vorstehenden Bereiche 28 treppenartig bzw. abgestuft ausgebildet.

Die Auslasselemente 25 der gezeigten Dosiervorrichtungen können aus verschiedenen Materialien bestehen. Bevorzugte Ausgestaltungsformen sehen vor, dass es sich um Metallkörper handelt. Die Auslasselemente 25 können als ein schraub- oder ein steckbarer Wechselring ausgebildet sein, welcher in einer entsprechenden Fassung am Vorratsbehälter 1 bzw. dessen Auslassöffnung 29 gehalten ist.

Bei der vorliegenden Erfindung ist auch die Zuführung einer Flüssigkeit durchaus möglich, so dass neben der Pulvermasse auch eine exakt angepasste Menge an Flüssigkeit zugefügt werden kann. Die Zuführung der Flüssigkeit wird aber nicht über den Vorratsbehälter erfolgen, sondern über eine getrennte Zuleitung. Es wäre aber durchaus denkbar, die Erfindung auch dann einzusetzen, wenn verschiedene Pulvermassen zu einer Mischung zusammengeführt werden sollen. Es können dann beispielsweise mehrere Vorratsbehälter mit getrennten Vibrationseinrichtungen vorgesehen werden, die möglicherweise die dosierten Pulvermassen in das gleiche Gefäß und an die eine Wiegeeinrichtung zuführen.

### Legende

### zu den Hinweisziffern:

- 1: Vorratsbehälter
- 2: Austragvorrichtung
- 3: Bereich
- 4: Einsatz
- 5: Abschnitt
- 6: Rand
- 7: Durchgangsöffnung
- 8: Vibrationseinrichtung
- 9: Gefäß
- 10: Wiegeeinrichtung
- 11: Bolzen
- 12: Durchgangsöffnung
- 13: Deckel
- 14: Wand
- 15: Kegel- oder Pyramidenabschnitt
- 16: Spitze
- 17: Rand
- 18: Übergangsabschnitt
- 19: Grundgestell
- 20: Abschluss
- 21: Tragbolzen
- 22: Verriegelungselemente
- 23: Steckvorrichtungen
- 24: Dichtungselement
- 25: Auslasselement
- 26: Innenwandabschnitt
- 27: zurückversetzter Bereich
- 28: vorstehender Bereich
- 29: Auslassöffnung
- 30: Durchströmöffnung

## Patentansprüche

1. Dosiervorrichtung für pulverförmige Substanzen, insbesondere zur Vorbereitung von zahnmedizinischen und zahntechnischen Pulvermassen, wobei die Pulvermassen in einen Vorratsbehälter (1) der Dosiervorrichtung einfüllbar sind und diesem Vorratsbehälter (1) eine Austragvorrichtung (2) zugeordnet ist und der untere Bereich (3) des Vorratsbehälters (1) verjüngt ausgebildet ist, **dadurch gekennzeichnet, dass** im Vorratsbehälter (1) ein Einsatz (4) angeordnet ist, der mindestens einen sich nach oben verjüngenden Abschnitt (5) aufweist, welcher im verjüngten unteren Bereich (3) des Vorratsbehälters (1) angeordnet ist, wobei zwischen dem unteren Rand (6) des sich verjüngenden Abschnitts (5) des Einsatzes (4) und dem verjüngten unteren Bereich (3) des Vorratsbehälters (1) eine oder mehrere Durchgangsöffnung(en) (7) frei bleibt bzw. frei bleiben, und dass dem Einsatz (4) und/oder dem Vorratsbehälter (1) eine Vibrationseinrichtung (8) zugeordnet ist bzw. sind, wobei der untere Bereich (3) des Vorratsbehälters (1) eine Auslassöffnung (29) für die pulverförmige Substanz aufweist, wobei an der Auslassöffnung (29) ein Auslasselement (25) angeordnet ist und das Auslasselement (25) zumindest einen, eine sich nach unten im Querschnitt verjüngende Durchströmöffnung (30) umfassenden, Innenwandabschnitt (26) aufweist, wobei der Innenwandabschnitt (26) von oben nach unten gesehen eine Abfolge aus abwechselnd aufeinander folgenden zurückversetzten Bereichen (27) und, vorzugsweise scharfkantigen, vorstehenden Bereichen (28) aufweist.

2. Dosiervorrichtung nach Anspruch 1, **dadurch gekennzeichnet, dass** ein das dosierte Pulver aufnehmendes Gefäß (9) auf einer Wiegeeinrichtung (10) der Dosiervorrichtung abstellbar ist, wobei die Wiegeeinrichtung (10) und die Vibrationseinrichtung (8) miteinander in Wirkverbindung stehen.

3. Dosiervorrichtung nach Anspruch 1 oder 2, **dadurch gekennzeichnet, dass** der untere Bereich (3) des Vorratsbehälters (1) kegel- oder pyramidenförmig verjüngt ausgebildet ist und vorzugsweise der Einsatz (4) einen nach oben hin sich kegel- oder pyramidenförmig verjüngenden Abschnitt (5) aufweist.

4. Dosiervorrichtung nach einem der Ansprüche 1 bis 3, **dadurch gekennzeichnet, dass** die Durchgangsöffnung (7), vorzugsweise umfangsgeschlossen, ringförmig ausgebildet ist oder als Durchgangsöffnungen (7) mehrere Bohrungen oder Durchbrechungen oder siebartige Abschnitte vorgesehen sind.

5. Dosiervorrichtung nach einem der Ansprüche 1 bis 4, **dadurch gekennzeichnet, dass** an der Unterseite des Einsatzes (4) ein Bolzen (11) oder eine Hülse nach unten absteht, der oder die den Durchflussquerschnitt verringert.

6. Dosiervorrichtung nach Anspruch 5, **dadurch gekennzeichnet, dass** die zwischen dem verjüngten unteren Bereich (3) des Vorratsbehälters (1) und dem unteren Rand (6) des sich nach oben verjüngenden Abschnitts (5) des Einsatzes (4) verbleibende(n) Durchgangsöffnung(en) (7) im Querschnitt größer ist (sind) als die zwischen dem verjüngten unteren Bereich (3) des Vorratsbehälters (1) und dem Bolzen (11) oder der Hülse verbleibende ringförmige Durchgangsöffnung (12) und/oder der Bolzen (11) bzw. die Hülse, der bzw. die von der Unterseite des Einsatzes (4) absteht, auswechselbar gehalten ist.

7. Dosiervorrichtung nach einem der Ansprüche 1 bis 6, **dadurch gekennzeichnet, dass** der Einsatz (4) gegenüber dem verjüngten unteren Bereich (3) des Vorratsbehälters (1) lagegesichert abgestützt ist, wobei vorzugsweise der Einsatz (4) fest mit dem Vorratsbehälter (1) verbunden ist und die Vibrationseinrichtung (8) im Einsatz (4) angeordnet ist.

8. Dosiervorrichtung nach einem der vorhergehenden Ansprüche, **dadurch gekennzeichnet, dass** der Einsatz (4) einen oberhalb des sich verjüngenden Abschnitts (5) liegenden Kegel oder Pyramidenabschnitt (15) aufweist, dessen Spitze (16) nach oben weist und dessen unterer Rand (17) einen geringeren Durchmesser als der untere Rand (6) des sich verjüngenden Abschnitts (5) aufweist und der mit dem sich verjüngenden Abschnitt (5) über einen zylinderförmigen Übergangsabschnitt (18) verbunden ist.

9. Dosiervorrichtung nach einem der vorhergehenden Ansprüche, **dadurch gekennzeichnet, dass** der Vorratsbehälter (1) samt dem Einsatz (4) an einem Grundgestell (19) abnehmbar und verriegelbar gehalten ist, wobei vorzugsweise der Vorratsbehälter (1) mittels eines hakenartigen oberen Abschlusses (20) an einem Tragbolzen (21) am Grundgestell (19) einhängbar und mit am unteren Endbereich angeordneten Verriegelungselementen (22) in der eingehängten Position verriegelbar gehalten ist.

10. Dosiervorrichtung nach Anspruch 9, **dadurch gekennzeichnet, dass** im Bereich der Verriegelungselemente (22)zwischen Vorratsbehälter (1) und Grundgestell (19) Steckvorrichtungen (23) für die elektrische Verbindung für den Betrieb der Vibrationseinrichtung (8) vorgesehen sind.

11. Dosiervorrichtung nach einem der Ansprüche 1 bis 10, **dadurch gekennzeichnet, dass** der Innenwandabschnitt (26) treppenartig oder abgestuft ausgebildet ist.

12. Verfahren zum Betrieb einer Dosiervorrichtung nach einem der Ansprüche 1 bis 11, **dadurch gekennzeichnet, dass** die Vibrationseinrichtung (8) am Beginn und am Ende des Dosiervorganges mit einer kleineren Vibrationsfrequenz betrieben wird als in einer dazwischen liegenden Phase des Dosiervorganges.

13. Verfahren zum Betrieb einer Dosiervorrichtung nach einem der Ansprüche 2 bis 11, sofern von Anspruch 2 abhängig, **dadurch gekennzeichnet, dass** die Vibrationseinrichtung (8) am Beginn und am Ende des Dosiervorganges mit einer kleineren Vibrationsfrequenz betrieben wird als in einer dazwischen liegenden Phase des Dosiervorganges und von der Wiegeeinrichtung (10) die Steuerung der Vibrationsdauer vorgegeben wird.

14. Verfahren nach Anspruch 12 oder 13, **dadurch gekennzeichnet, dass** die Vibrationseinrichtung (8) voreinstellbar vor Erreichen der gewünschten Fördermenge ganz abgeschaltet wird und dass dann anschließend für die Feindosierung die Vibrationseinrichtung (8) auf einen Maximalwert der Vibrationsfrequenz geschaltet wird und die Vibrationsfrequenz von dieser Einstellung stufenlos oder abgestuft bis auf einen Minimalwert, vorzugsweise Null, verringert wird.

## Claims

1. Metering device for powdery substances, in particular for preparing quantities of dental and prosthodontic powder, the quantities of powder being able to be poured into a supply container (1) of the metering device and this supply container (1) having a dispersing arrangement (2) associated with it and the bottom region (3) of the supply container (1) being of a tapered form, **characterised in that** there is arranged in the supply container (1) an insert (4) which has at least one upwardly tapering portion (5) which is arranged in the tapered bottom region (3) of the supply container (1), there being one or more through-openings (7) which are left open between the bottom edge (6) of the tapering portion (5) of the insert (4) and the tapered bottom region (3) of the supply container (1), and **in that** the insert (4) and/or the supply container (1) have/has associated with them/it a vibratory means (8), the bottom region (3) of the supply container (1) having an outlet opening (29) for the powdery substance, an outlet member (25) being arranged at the outlet opening (29) and the outlet member (25) having at least one portion (26) of its inner wall which encloses an opening for through-flow (30) which tapers in cross-section downwards, the portion (26) of inner wall having, viewed from top to bottom, a sequence of set-back regions (27) and projecting and preferably sharp-edged regions (28) which follow one another in alternating succession.

2. Metering device according to claim 1, **characterised in that** a holder (9) which receives the metered powder can be placed down on a weighing means (10) of the metering device, the weighing means (10) and the vibratory means (8) being operatively connected to one another.

3. Metering device according to claim 1 or 2, **characterised in that** the bottom region (3) of the supply container (1) is formed to taper in a conical or pyramidal shape and the insert (4) preferably has a portion (5) which tapers upwards in a conical or pyramidal shape.

4. Metering device according to one of claims 1 to 3, **characterised in that** the through-opening (7) is of an annular, preferably circumferentially continuous, form, or a plurality of holes or perforations or screen-like portions are provided as through-openings (7).

5. Metering device according to one of claims 1 to 4, **characterised in that** projecting downwards from the underside of the insert (4) there is a spigot (11) or sleeve which reduces the cross-section for through-flow.

6. Metering device according to claim 5, **characterised in that** the through-opening(s) (7) which is/are left between the tapered bottom region (3) of the supply container (1) and the bottom edge (6) of the upwardly tapering portion (5) of the insert (4) is/are larger in cross-section than the annular through-opening (12) which is left between the tapered bottom region (3) of the supply container (1) and the spigot (11) or sleeve, and/or the spigot (11) or sleeve which projects from the underside of the insert (4) is held in such a way as to be exchangeable.

7. Metering device according to one of claims 1 to 6, **characterised in that** the insert (4) is supported in such a way as to be secured in position relative to the tapered bottom region (3) of the supply container (1), the insert (4) preferably being solidly connected to the supply container (1) and the vibratory means (8) preferably being arranged in the insert (4).

8. Metering device according to one of the preceding claims, **characterised in that** the insert (4) has, situated above the tapering portion (5), a cone or a pyramidal portion (15) whose tip (16) points upwards and whose bottom edge (17) is smaller in diameter than the bottom edge (6) of the tapering portion (5) and which is connected to the tapering portion (5) by means of a cylindrical transitional portion (18).

9. Metering device according to one of the preceding claims, **characterised in that** the supply container (1) together with the insert (4) is held on a base (19) in such a way as to be removable and lockable, the supply container (1) preferably being able to be hooked onto a supporting rod (21) on the base (19) by means of a hook-like terminal portion (20) at the top and being held in such a way as to be lockable in the hooked-on position by locking members (22) arranged in the terminal region at the bottom.

10. Metering device according to claim 9, **characterised in that** plug and socket devices (23) are provided between the suppply container (1) and the base (19), in the region of the locking members (22), to make the electrical connection to operate the vibratory means (8).

11. Metering device according to one of claims 1 to 10, **characterised in that** the portion (26) of inner wall is of a staircase-like or stepped form.

12. Method of operating a metering device according to one of claims 1 to 11, **characterised in that** the vibratory means (8) is operated at a lower frequency of vibration at the beginning and end of the metering process than in an intervening phase of the metering process.

13. Method of operating a metering device according to one of claims 2 to 11 where dependent on claim 2, **characterised in that** the vibratory means (8) is operated at a lower frequency of vibration at the beginning and end of the metering process than in an intervening phase of the metering process and the control of the length of vibration is specified by the weighing means (10).

14. Method according to claim 12 or 13, **characterised in that** the vibratory means (8) is shut down completely in a presettable way before the desired amount to be fed is reached and **in that** then, for precision metering, the vibratory means (8) is switched to a maximum of the frequency of vibration and from this setting the frequency of vibration is reduced, steplessly or in steps, to a minimum and preferably to zero.

## Revendications

1. Dispositif de dosage pour des substances pulvérulentes, notamment pour la préparation de masses pulvérulentes dans le domaine de la dentisterie ou de la technique dentaire, dans lequel les masses pulvérulentes peuvent être versées dans un réservoir de stockage (1) du dispositif de dosage, et un dispositif de décharge (2) est associé à ce réservoir de stockage (1), et la zone inférieure (3) du réservoir de stockage (1) est conçue rétrécie, **caractérisé en ce qu'**un insert (4) est disposé dans le réservoir de stockage (1), lequel insert présente au moins une section (5) qui se rétrécit vers le haut et qui est placée dans la zone inférieure rétrécie (3) du réservoir de stockage (1), une ou plusieurs ouvertures de passage (7) restant libres entre le bord inférieur (6) de la section (5) de l'insert (4) se rétrécissant et la zone inférieure rétrécie (3) du réservoir de stockage (1), et **en ce qu'**un dispositif de vibration (8) est associé à l'insert (4) et/ou au réservoir de stockage (1), la zone inférieure (3) du réservoir de stockage (1) présentant une ouverture de sortie (29) pour la substance pulvérulente, un élément de sortie (25) étant disposé dans l'ouverture de sortie (29) et l'élément de sortie (25) présentant au moins une section de paroi intérieure (26) comprenant une ouverture d'écoulement (30) qui, en coupe transversale, se rétrécit vers le bas, la section de paroi intérieure (26) présentant, considéré de haut en bas, une succession de zones en retrait (27) et de zones en saillie (28), de préférence à arêtes vives, se suivant de façon alternée.

2. Dispositif de dosage selon la revendication 1, **caractérisé en ce qu'**un récipient (9) recevant la poudre dosée peut être placé sur un dispositif de pesage (10) du dispositif de dosage, le dispositif de pesage (10) et le dispositif de vibration (8) étant en liaison active l'un avec l'autre.

3. Dispositif de dosage selon l'une des revendications 1 ou 2, **caractérisé en ce que** la zone inférieure (3) du réservoir de stockage (1) est conçue rétrécie de façon conique ou pyramidale, et de préférence, l'insert (4) présente une section (5) se rétrécissant vers le haut de façon conique ou pyramidale.

4. Dispositif de dosage selon l'une des revendications 1 à 3, **caractérisé en ce que** l'ouverture de passage (7) est conçue de façon annulaire, de préférence sur toute sa périphérie, ou plusieurs alésages ou trous traversants ou sections en forme de passoire sont prévus en guise d'ouvertures de passage (7).

5. Dispositif de dosage selon l'une des revendications 1 à 4, **caractérisé en ce qu'**une broche (11) ou un manchon saille vers le bas sur le côté inférieur de l'insert (4), laquelle ou lequel réduit la section transversale d'écoulement.

6. Dispositif de dosage selon la revendication 5, **caractérisé en ce que** la ou les ouvertures de passage (7) restant entre la zone inférieure rétrécie (3) du réservoir de stockage (1) et le bord inférieur (6) de la section (5) de l'insert (4) se rétrécissant vers le haut ont une section transversale plus grande que l'ouverture de passage (12) de forme annulaire restant entre la zone inférieure rétrécie (3) du réservoir de stockage (1) et la broche (11) ou le manchon, et/ou la broche (11) ou le manchon qui s'aille du bord inférieur de l'insert (4) est interchangeable.

7. Dispositif de dosage selon l'une des revendications 1 à 6, **caractérisé en ce que** l'insert (4) est supporté fixé en position par rapport à la zone inférieure rétrécie (3) du réservoir de stockage (1), de préférence l'insert (4) étant relié fixement au réservoir de stockage (1) et le dispositif de vibration (8) étant disposé dans l'insert (4).

8. Dispositif de dosage selon l'une des revendications précédentes, **caractérisé en ce que** l'insert (4) présente une section conique ou pyramidale (15) située au-dessus de la section se rétrécissant (5), section conique ou pyramidale dont la pointe (16) est dirigée vers le haut et dont le bord inférieur (17) présente un diamètre plus petit que le bord inférieur (6) de la section se rétrécissant (5) et qui est reliée à la section se rétrécissant (5) par une section de transition cylindrique (18).

9. Dispositif de dosage selon l'une des revendications précédentes, **caractérisé en ce que** le réservoir de stockage (1) est maintenu avec l'insert (4) sur un cadre de base (19) de sorte à pouvoir être retiré et être verrouillé, le réservoir de stockage (1) pouvant de préférence être suspendu à un axe support (21) situé sur le cadre de base (19) par une extrémité supérieure en forme de crochet (20) et étant maintenu en pouvant être verrouillé en position suspendue avec des éléments de verrouillage (22) disposés sur la zone terminale inférieure.

10. Dispositif de dosage selon la revendication 9, **caractérisé en ce que** des dispositifs de connexion (23) sont prévus entre le réservoir de stockage (1) et le cadre de base (19), dans la zone des éléments de verrouillage (22), pour la connexion électrique en vue du fonctionnement du dispositif de vibration (8).

11. Dispositif de dosage selon l'une des revendications 1 à 10, **caractérisé en ce que** la section de paroi intérieure (26) est conçue en forme d'escalier ou de façon échelonnée.

12. Procédé pour faire fonctionner un dispositif de dosage selon l'une des revendications 1 à 11, **caractérisé en ce que** le dispositif de vibration (8) est actionné au début et à la fin du processus de dosage avec une fréquence de vibration plus petite que durant une phase intermédiaire du processus de dosage.

13. Procédé pour faire fonctionner un dispositif de dosage selon l'une des revendications 2 à 11 dans la mesure où elles dépendent de la revendication 2, **caractérisé en ce que** le dispositif de vibration (8) est actionné au début et à la fin du processus de dosage avec une fréquence de vibration plus petite que durant une phase intermédiaire du processus de dosage, et la commande de la durée de vibration est définie par le dispositif de pesage (10).

14. Procédé selon la revendication 12 ou 13, **caractérisé en ce que** le dispositif de vibration (8) est complètement désactivé de façon préréglée avant d'atteindre la quantité convoyée souhaitée, puis, pour le dosage fin, le dispositif de vibration (8) est commuté sur une valeur maximale de la fréquence de vibration et la fréquence de vibration est réduite depuis ce réglage de façon continue ou par paliers jusqu'à une valeur minimale, de préférence jusqu'à zéro.
